# EUROPEAN PATENT APPLICATION

(11) **EP 2 725 729 A1**
(43) Date of publication of application: **30.04.2014**
(21) Application number: 12306323.2
(22) Date of filing: 25.10.2012
(51) Int. Cl.: H04J 14/02, H04J 14/04, H04J 14/06

(54) **Optical data transmission method and system**

(71) Applicant: Alcatel Lucent, 75007 Paris (FR)
(72) Inventor: Buelow, Henning, 70806 Kornwestheim (DE)
(74) Representative: Mildner, Volker

(57) **Abstract**

An optical transport systems is described, which implements spatial multiplexing over a number of parallel fibers for long distance transmission in combination with multi-mode optical signal processing. The optical transmission system has a source network element (10; 20), a destination network element (17; 40) and one or more intermediate network elements (12; 22, 32). A transmission path between the source network element and the destination network element has two or more fiber spans (C1, C2, C3, C4), each having a number of N parallel single-mode waveguides (11a-11c; 21a-21c). At least one of the intermediate network elements (12; 22, 32) is a multi-mode network element adapted to process multi-mode optical signals. A single-mode to multi-mode coupler (13; 23, 33) is arranged in front of the multi-mode network element (12; 22, 32) and α multi-mode to single-mode coupler (16; 26, 36) is arranged behind the multi-mode network element (12; 22, 32).

## Description

### Field of the Invention

The present invention relates to the field of telecommunications and more particularly to a method and related system of optical data transmission.

### Background of the Invention

Traffic volumes in communications networks increases continuously. To meet the increasing traffic demand in optical networks, advanced modulation techniques have been developed to increase the spectral efficiency. Coherent optical receivers and DSP processing allow to transmit data signals at a spectral efficiency which comes close to ultimate physical limits.

Today, optical transmission uses single-mode optical fibers (SMF) and optical network elements, e.g. optical amplifiers and wavelength add/drop multiplexers for each individual fiber.

As a further degree of freedom, it has been proposed to multiplex optical signals in space domain using multi-mode optical fibers and transmit signals using different propagation modes.

### Summary of the Invention

A cost efficient and scalable solution for optical transport systems is required, to meet the expected capacity requirements. These and other objects that appear below are achieved

These and other objects that appear below are achieved by an optical transmission system with a source network element, a destination network element and one or more intermediate network elements. A transmission path between the source network element and the destination network element has two or more fiber spans, each having a number of N parallel single-mode waveguides. At least one of the intermediate network elements is a multi-mode network element adapted to process multi-mode optical signals. A single-mode to multi-mode coupler is arranged in front of the multi-mode network element and a multi-mode to single-mode coupler is arranged behind the multi-mode network element.

The present invention provides a system and related method that implements spatial multiplexing over a number of parallel fibers for long distance transmission in combination with multi-mode optical signal processing.

### Brief Description of the Drawings

Preferred embodiments of the present invention will now be described with reference to the accompanying drawings in which
- figure 1: shows a first embodiment of an optical transmission system employing optical fibers for single-mode transmission and optical network elements for multi-mode processing;
- figure 2: sows a second embodiment for multi-mode signal processing and single mode fiber transmission;
- figure 3: shows an adiabatic coupler between multi-mode and single-mode fibers;
- figure 4: shows an alternative technique for multi-mode to single-mode coupling.

### Detailed Description of the Invention

Even though multi-mode fibers exhibit a high theoretical capacity, it has been found that multi-mode data transmission faces challenges due to differential mode delay, which requires a high amount of digital MIMO processing effort at the receiver side. Moreover multi-mode fibers suffer from higher performance degradations caused by additional non-linear distortions as compared to single-mode transmission.

Single-mode transmission on the other hand requires individual network elements per fiber. Optical switches, reconfigurable optical add/drop multiplexers (ROADMs), and optical amplifiers for single-mode transmission have limited potential for savings of footprint, power, and port count.

In contrast, multi-mode fiber signal transport has the potential of simultaneous MMF amplification of many channels in one fiber or ROADM processing within a single network element. More particularly, ROADMs based on LCOS (liquid crystal on silicon) technology work with optical beams and are suited to switch multiple MMF modes in a single process.

The present invention therefore proposes a combination of single-mode transmission and multi-mode processing in a data transmission system. The transmission paths through the network lead over cables or bundles of single-mode fibers, or, alternatively, over a multi-core fiber. At a network node, the bunch of single core fibers or the cores of the multi-core fiber are coupled via a single-mode to multi-mode multiplexer to a multi-mode fiber. The network element processes then the multi-mode signals. At the output of the network element, a multi-mode fiber that carries the processed multi-core signals is coupled via a multi-mode to single-mode multiplexer to a bunch of single-mode fibers or cores of a multi-core fiber, again.

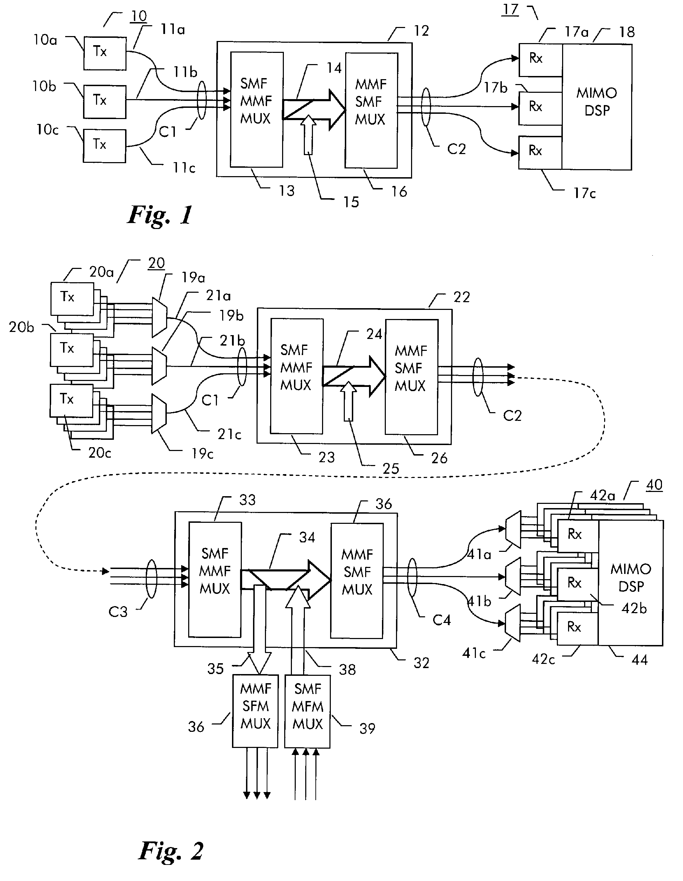

An example of a transmission system embodying this combination is shown schematically in figure 1. The principle of operation will be explained in this simplified embodiment having three parallel single-mode waveguides.

A signal source 10 has three optical transmitters (Tx) 10a-10c. Each Tx is connected to an optical fiber 11a-11c. Tree parallel optical fibers 11a-11c form a fiber cable C1. After a certain transmission distance of maybe a few hundred kilometers, the parallel optical signals transmitted over the fiber cable need amplification. The fiber cable C1 is thus connected to an optical amplifier 12.

The optical amplifier, which can be a fiber amplifier for instance, has at its input a mode converter 13, which acts as a single-mode to multi-mode multiplexer. The mode converter 13 connects the tree single-mode fibers 11α-11c to three different fundamental transmission modes of a multi-mode optical gain medium 14. A pump signal 15 is injected into the gain medium 14 and serves to amplify all mode-multiplexed signals by stimulated emission of radiation as these travel through gain medium 14.

Gain medium 14 can be for instance a fiber coil with a rare-earth doped optical multi-mode fiber. At the end of gain medium 14, a second mode converter 16 acting as multi-mode to single-mode demultiplexer extracts the mode-multiplexed optical signals and feeds these into separate single-mode fibers of a fiber cable C2 for transmission over the next fiber section.

A signal sink 17 at the far end of fiber cable C2 receives the three parallel single-mode signals and feeds these to three preferably coherent optical receivers (Rx) 17a, 17b, 1 7c for O/E conversion and frequency downconversion from the optical carrier frequency to low intermediate frequency (few GHz or less) which can be handled by receiver electronics. The O/E converted signals are then subject to MIMO (multiple input multiple output) processing at DSP 18. MIMO processing serves to compensate mode mixing that may have occurred through multi-mode processing in network elements along the transmission path. MIMO processing is a technology known per se from radio transmission where multiple antennas are used at the transmitter and receiver to improve communication performance.

MIMO processing means that the channel transfer matrix H(f) between transmitter and receiver - which might dominantly includes mixing between the modes ― is compensated by realizing an nearly inverse transfer matrix H_{eq} in the electronic domain in the receiver signal processing. There are different options known to determine a MIMO equalizer transfer function H_{eq}. Among them is the measuring of the channel transfer function H with help of known trainings sequences and then numerical inversion in the receiver or by applying a least-mean-square LMS adaptation in a decision directed scheme by updating H_{eq} parameters with help of decisions. If this adaptation scheme is applied to a equalizer matrix H_{eq} in time domain, then each element hᵢⱼ of the matrix consist of an FIR (finite impulse response) filter of K taps hᵢⱼ₁...h_{ijK}. In the well known LMS scheme these taps are then updated using error between decided symbols and received symbols at each receiver.

Typically, optical signals transmitted along the single-mode fibers using wave-division multiplex. This is show schematically in a second embodiment in figure 2. In this embodiment, four signal sources 20 are provided, which each have a set of three transmitters Tx 20a, 20b, 20c for generating single-mode signals. Each set of transmitters Tx generates signals at a specific wavelength assigned to its signal source. The transmitters are connected to wavelength multiplexers 19a, 19b, 19c, which multiplex the signals at different wavelengths from the different transmitter sets to form single-mode wavelength multiplexed signals for transmission along fiber cable C1.

As in figure 1, a fiber amplifier 22 is provided to amplify the optical signals. At the input of amplifier 22, the three single-mode fibers from fiber cable C1 are fed to a single-mode to multi-mode multiplexer 23, which converts which converts each single-mode signal to a different set of individual principal modes of a multi-mode gain medium 24, such as a rare-earth doped optical multi-mode fiber. For each single-mode signal the amplitudes of the excited modes can be summarized in an amplitude vector. The amplitude vectors of different single mode signals are approximately orthogonal (exactly orthogonal for lossless system) and hence the mode mixing introduced by coupling from single-mode to multi-mode structures along the link , such as multiplexers, can efficiently be compensated by MIMO processing in the receiver.

A pump signal 25 is injected into gain medium 24 to amplify the mode-multiplexed signals as these travel along gain medium 24. At the end of gain medium 24, a multi-mode to single-mode converter 26 demultiplexes the spatially multiplexed mode signals and feeds them to three outgoing single-mode fibers of a fiber cable C2.

After traversing potential other network elements (not shown), the single-mode WDM signals reach via a fiber cable C3 a reconfigurable add/drop multiplexer 32 capable of switching multi-mode WDM signals in wavelength domain simultaneously for all modes (space domain). This means that a transmitter signal at a specific wavelength, which is already distributed among all modes due to mode mixing in SMF/MMF multiplexer and other network elements, will completely appear at an MMF output port of the wavelength multiplexer. A single-mode to multi-mode multiplexer 33 converts the received single-mode WDM signals to a set of modes of a multi-mode signal. This is fed to a multi-mode add/drop device 34, which is based on LCOS (liquid crystal on silicon) technology and switches beams excited by a different set of modes and different wavelengths.

As an example, such a beam can be found at the output of a collimator which transforms the light of an MMF via a lens system to a lower divergence beam with a beam diameter larger than the spot diameter of the MMF. The divergence of a beam decreases with decreasing radial wave number kᵣ and this radial wavenumber decreases linearly with the diameter of the MMF field spot if the number of mode is kept constant. On the other hand the wave number increases with square root of the mode number, if the MMF spot size is kept constant: Hence, for designing a beam optic system based on beams excited by MMF, we can keep the beam divergence sufficiently low by increasing the beam diameter leaving the collimator only with the square root of the MMF mode number.

The add/drop device 34 has a drop port 35 for a multi-mode signal of a particular wavelength to be dropped and an add port 38 for a multi-mode signal of a wavelength to be added. At its network output, add/drop device 34 has a multi-mode to single-mode coupler 37 for demultiplexing the multi-mode signal to individual single-mode signals for onwards transmission at single-mode fiber cable C4.

A multi-mode to single-mode coupler at drop port 35 converts multi-mode signals to be dropped to single-mode signals for output to a client device via individual single-mode fibers. At the add port 38, a single-mode to multi-mode coupler converts each of the received single-mode signals to a unique set of modes of a multi-mode signal to be added by add/drop device 34.

The implementation of a multi-mode add/drop device is not a subject of the present description but the necessary technology is in principle available to those skilled in the art. An add/drop multiplexer for few-mode signals that can be used in the above embodiment is for instance described in the article "Reception of Dual-LP11-Mode CO-OFDM Signals through Few-mode Compatible Optical Add/Srop Multiplexer" by X. Chen et al, Post-Deadline Paper OFC 2012, which is incorporate by reference herein. LCOS elements suitable to implement a multi-mode optical add/drop multiplexer are described in the conference article "Highly programmable Wavelength Selective Switch based on Liquid Crystal on Silicon switching elements" by G. Baxter et al, OFC 2006.

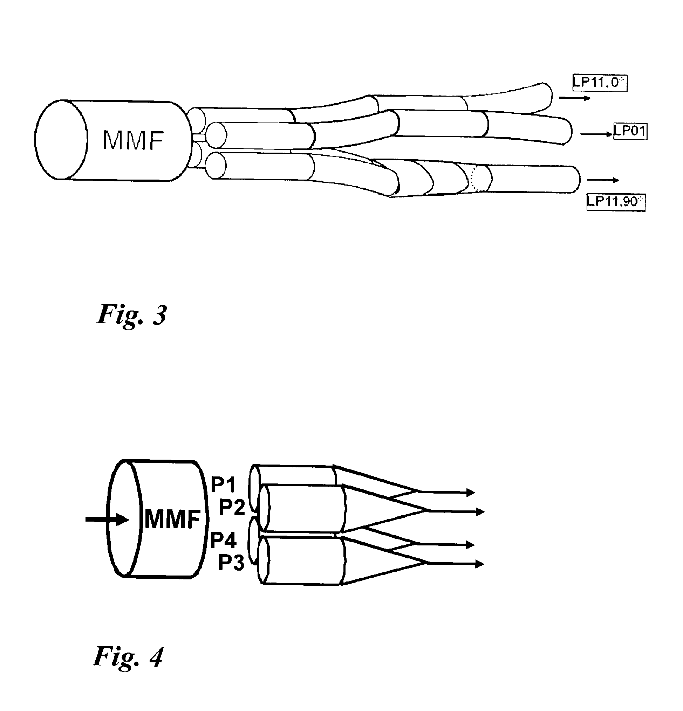

Figures 3 and 4 show possible implementations for the multi-mode to single-mode and single-mode to multi-mode coupling. Figure 3 shows a fused fiber coupler with provides a gradual transition from single-mode fibers to a multi-mode fiber. The coupler is described in more details in EP2372420A1, which is incorporated by reference herein.

Alternatively tapered fused fiber Nx SMF to MMF couplers, which are known as photonic lanterns, can be used, as proposed for MIMO processing in the conference article "Coherent Multimode-Fiber MIMO Transmission with Spatial Constellation Modulation" by H. Bülow et al, proc. ECOC 2011, which is incorporated by reference herein. A photonic lantern is described in more detail in the article "Efficient multi-mode to single-mode coupling in a photonic lantern" by D. Noordegraaf et al, Opt. Express 17 (2009), pp 1988-1994.

Figure 4 shows a coupler, where the end face of the multi-mode fiber is sampled by individual spatial samplers called patches P1-P4. The patches P1-P4 collect the optical field within an area and transform it to the field of a single-mode waveguide or fiber. The number of patches must be larger or equal to the number of modes carried within the multi-mode fiber. It shows that between the signals from different patches, only unitary mode mixing occurs, which can be equalized without loss through MIMO processing.

The spatial samplers provide M patches or samples of the MMF field. A subsequent processing stage can be used to isolate the N modes. The processing stage may can be implemented all-optically with a single-mode waveguide filter structure providing a MIMO filter. The MIMO filter has multiple processing stages in sequence. Each processing stage has one or more optical couplers to process pairs of the single-mode waveguides and may additionally contain one or more phase shifters. As a result, the N single-mode signals at an output of the MIMO filter will be formed as linear combinations of the M patch signals. This is described in more detail in copending European patent application by the same inventor, filing number 11290543.5, which is incorporated by reference herein.

Due to the reversibility of light paths, both type of MMF/SMF couplers can equally be used to couple light from and to multi-mode fibers into and from single-mode fibers.

It has to be understood that the set of single-mode signals of a particular wavelength transmitted over individual single-mode fibers form a transmission channel. The above embodiments thus implement a spatial multiplexing onto separate single mode fibers for long distance transmission and spatial multiplexing to separate transmission modes for local processing purpose. When the single-mode signals of a particular wavelength are received via a set of single-mode fibers at a destination node, they are processed in common.

More particularly, the signal sink 40 in figure 2 has three wavelength demultiplexers 41 a, 41 b, 41 c, which demultiplex the WDM signals from the three fibers of fiber cable C4 and feed the demultiplexed single wavelength single-mode signals to separate optical receivers (Rx) 42a, 42b, 42c, which convert the received signals to the electrical. Preferably, receivers 42a, 42b, 42c are coherent optical receivers. The three electrical signals are fed to a signal processor DSP 44, which performs MIMO processing. This allows to compensate any mode mixing that may have occurred within any of the network elements along the transmission path. Even damage or unexpected high loss of individual fibers can be averaged by MIMO processing, thus leading to a robust operation. Preferably, the DSP additionally performs forward error correction (FEC).

It should be noted that even though the embodiments have made use of only three parallel single-mode fibers on the transmission spans and multi-mode processing using three fundamental propagation modes inside network elements along the transmission path, the invention is not limited to this particular implementation but can be implemented with a higher number of single-mode fibers and propagation modes.

Moreover, the embodiments show only four wavelength channels. It should be understood that in real implementations, a much higher number of DWDM wavelength channels can be transmitted, e.g. 80 wavelength channels. In addition to this, polarization multiplexing can be applied on each wavelength channel, thus increasing the number of available channels by another factor of two.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. An optical transmission system, comprising a source network element (10; 20), a destination network element (17; 40) and one or more intermediate network elements (12; 22, 32), wherein a transmission path between said source network element (10; 20) and said destination network element (12; 22, 32) comprises two or more fiber spans (C1, C2, C3, C4) having a number of N parallel single-mode waveguides (11a-11c; 21a-21c); wherein at least one of said intermediate network elements (12; 22, 32) is a multi-mode network element adapted to process multi-mode optical signals; and wherein a single-mode to multi-mode coupler (13; 23, 33) is arranged in front of said multi-mode network element (12; 22, 32) and a multi-mode to single-mode coupler (16; 26, 36) is arranged behind said multi-mode network element.

2. An optical transmission system according to claim 1, wherein said source and destination network elements (10, 17; 20, 40) are adapted to transmit and receive, respectively, a set of N parallel single-mode optical signals of a pre-assigned wavelength, and wherein said N parallel single-mode optical signals of a particular wavelength form a transmission channel.

3. An optical transmission system according to claim 1, further comprising a wavelength multiplexer (19a-19c) and a wavelength demultiplexer (41 a-41 c) to multiplex and demultiplex, respectively, a plurality of sets of single-mode optical signals of different wavelengths for transmission over said fiber spans.

4. An optical transmission system according to claim 1, wherein said intermediate network elements (12; 22, 32) comprise one or more of a multi-mode optical amplifier, a multi-mode optical add/drop multiplexer or a multi-mode optical spatial switch.

5. An optical transmission system according to claim 1 or 2, wherein said destination network element (17; 40) comprises a set of N optical receivers (17a-17c; 42a-42c) for converting optical signals from said N parallel single-mode waveguides to N electrical signals; and wherein said destination network element comprises a signal processor (18; 44) adapted to perform a MIMO processing operation on said N electrical signals to compensate for mode mixing occurred at any of said one or more intermediate multi-mode network elements (12; 22, 32).

6. An optical transmission system according to claim 1, wherein said single-mode waveguides are individual single-mode fibers of a fiber cable.

7. An optical transmission system according to claim 1, wherein said single-mode waveguides are fiber cores of a multi core fiber.

8. A method of transmitting optical signals, comprising:
- at a source network element (10; 20), providing N single-mode optical signals forming a common transmission channel;
- transmitting said single-mode optical signals over N parallel single-mode waveguides (11a-11c; 21a-21c);
- providing a multi-mode network element (12; 22, 32) adapted to process multi-mode optical signals;
- in front of said multi-mode network element (12; 22, 32), converting said N single-mode optical signals to different propagation modes of a mode multiplexed multi-mode optical signal;
- processing said multi-mode optical signal at said multi-mode network element (12; 22, 32);
- behind said multi-mode network element (12; 22, 32), converting said multi-mode optical signal back to single-mode optical signals;
- transmitting said single-mode optical signals over N parallel single-mode waveguides to a destination network element (17; 40); and
- at said destination network element (17; 40), receiving said parallel single-mode optical signals and recovering said transmission channel therefrom.

9. A method according to claim 8, wherein said N single-mode optical signals have a common, pre-assigned wavelength.
